# EUROPEAN PATENT APPLICATION

(11) **EP 4 598 012 A1**
(43) Date of publication of application: **06.08.2025**
(21) Application number: 23889009.9
(22) Date of filing: 30.10.2023
(51) Int. Cl.: H04N 13/332, H04N 13/383, H04N 13/239, H04N 13/156, H04N 13/139, H04N 23/951, G06F 13/42, H04N 23/57, H04N 5/907

(54) **WEARABLE ELECTRONIC DEVICE INCLUDING CAMERA AND OPERATION METHOD THEREOF**

(30) Priority: 07.11.2022 KR 20220147071; 07.12.2022 KR 20220169460
(71) Applicant: Samsung Electronics Co., Ltd., Suwon-si, Gyeonggi-do 16677 (KR)
(72) Inventor: UHM, Junwhon, Suwon-si Gyeonggi-do 16677 (KR); JEON, Jina, Suwon-si Gyeonggi-do 16677 (KR); KIM, Chulkwi, Suwon-si Gyeonggi-do 16677 (KR); YOUN, Yeotak, Suwon-si Gyeonggi-do 16677 (KR)
(74) Representative: Gulde & Partner
(86) International application number: PCT/KR2023/017041
(87) International publication number: WO 2024/101747

(57) **Abstract**

A wearable electronic device may comprise a first camera, a second camera including an image processing circuit, a memory, and at least one processor, wherein the memory stores at least one instruction causing, when executed by the at least one processor, the wearable electronic device to: while the wearable electronic device is worn by a user, identify a gaze area of the user via the first camera; acquire an image of a first resolution by photographing an external object via the second camera; determine, in the image, a first area corresponding to the gaze area of the user and a second area corresponding to an area other than the gaze area; acquire a first image corresponding to the first area from the image through a first channel among a plurality of channels between the processor and the second camera, the first image having the first resolution; and acquire a second image corresponding to the second area through a second channel among the plurality of channels, the second image having a second resolution lower than the first resolution. Various other embodiments are possible.

## Description

### [Technical Field]

Various embodiments of the disclosure relate to a wearable electronic device including a camera and an operation method thereof.

### [Background Art]

Various services and additional functions provided through wearable electronic device, such as, an augmented reality glass device have been increased.

The augmented reality glass device is a wearable device worn on the user's head and may provide augmented reality services to users by providing a content through a display. The display of the augmented reality glass device may be realized as a light output device to display a content through a glass member.

The above-described information may be provided as a related art to help understanding of the disclosure. No claim or determination is made as to the applicability of any of the foregoing as prior art to the disclosure.

### [Detailed Description of the Invention]

### [Technical Solution]

According to an embodiment, a wearable electronic device may include a first camera, a second camera including an image processing circuit, memory, and at least one processor.

According to an embodiment, the memory may store at least one instruction, when executed by the at least one processor, causes the wearable electronic device to, in a state where the wearable electronic device is worn by a user, identify a gaze area of the user through the first camera.

According to an embodiment, the memory may store at least one instruction causing, when executed by the at least one processor, the wearable electronic device to acquire an image of a first resolution generated by photographing an external object through the second camera.

According to an embodiment, the memory may store at least one instruction causing, when executed by the at least one processor, the wearable electronic device to determine, in the image, a first area corresponding to the gaze area of the user and a second area corresponding to an area other than the gaze area.

According to an embodiment, the memory may store at least one instruction causing, when executed by the at least one processor, the wearable electronic device to acquire a first image having the first resolution and corresponding to the first area from the image through a first channel among multiple channels between the processor and the second camera.

According to an embodiment, the memory may store at least one instruction causing, when executed by the at least one processor, the wearable electronic device to acquire a second image having a second resolution lower than the first resolution and corresponding to the second area through a second channel among the multiple channels.

According to an embodiment, an operation method of a wearable electronic device may include an operation of, in a state where the wearable electronic device is worn by a user, identifying a gaze area of the user through a first camera included in the wearable electronic device.

According to an embodiment, the operation method of the wearable electronic device may include an operation of acquiring an image of a first resolution generated by photographing an external object through a second camera included in the wearable electronic device.

According to an embodiment, the operation method of the wearable electronic device may include an operation of determining, in the image, a first area corresponding to the gaze area of the user and a second area corresponding to an area other than the gaze area.

According to an embodiment, the operation method of the wearable electronic device may include an operation of acquiring a first image having the first resolution and corresponding to the first area from the image through a first channel among multiple channels between a processor included in the wearable electronic device and the second camera.

According to an embodiment, the operation method of the wearable electronic device may include an operation of acquiring a second image having a second resolution lower than the first resolution and corresponding to the second area through a second channel among the multiple channels.

According to an embodiment, a non-transitory computer-readable recording medium may store at least one instruction which may perform an operation of, in a state where the wearable electronic device is worn by a user, identifying a gaze area of the user through a first camera included in the wearable electronic device.

According to an embodiment, the non-transitory computer-readable recording medium may store at least one instruction which may perform an operation of acquiring an image of a first resolution generated by photographing an external object through a second camera included in the wearable electronic device.

According to an embodiment, the non-transitory computer-readable recording medium may store at least one instruction which may perform an operation of determining, in the image, a first area corresponding to the gaze area of the user and a second area corresponding to an area other than the gaze area.

According to an embodiment, the non-transitory computer-readable recording medium may store at least one instruction which may perform an operation of acquiring a first image having the first resolution and corresponding to the first area from the image through a first channel among multiple channels between a processor included in the wearable electronic device and the second camera.

According to an embodiment, the non-transitory computer-readable recording medium may store at least one instruction which may perform an operation of acquiring a second image having a second resolution lower than the first resolution and corresponding to the second area through a second channel among the multiple channels.

### [Brief Description of Drawings]

FIG. 1 is a block diagram illustrating an electronic device in a network environment according to various embodiments.
FIG. 2 is a perspective diagram illustrating an inner configuration of a wearable electronic device according to an embodiment.
FIG. 3A is a schematic block diagram illustrating a configuration of a wearable electronic device according to an embodiment.
FIG. 3B is a schematic block diagram illustrating a configuration of a second camera according to an embodiment.
FIG. 4 is a flowchart illustrating an operation method of a wearable electronic device according to an embodiment.
FIG. 5 is a flowchart illustrating an operation method of a wearable electronic device according to an embodiment.
FIG. 6A is a diagram illustrating an operation of a conventional wearable electronic device to acquire an image corresponding to a gaze area of a user and an image corresponding to an area other than the gaze area according to a comparative example.
FIG. 6B is a diagram illustrating an operation of a wearable electronic device to acquire an image corresponding to a gaze area of a user and an image corresponding to an area other than the gaze area according to an embodiment.
FIG. 6C is a diagram illustrating an operation of a wearable electronic device to acquire an image corresponding to a gaze area of a user and an image corresponding to an area other than the gaze area according to an embodiment.
FIG. 7A is a flowchart illustrating an operation method of a wearable electronic device according to an embodiment.
FIG. 7B is a diagram illustrating an operation of a wearable electronic device to acquire an image corresponding to a gaze area of a user and an image corresponding to an area other than the gaze area according to an embodiment.
FIG. 7C is a diagram illustrating an operation of a wearable electronic device to acquire an image corresponding to a gaze area of a user and an image corresponding to an area other than the gaze area according to an embodiment.
FIG. 8 is a diagram illustrating a wearable electronic device synthesizing an image corresponding to a gaze area of a user and an image corresponding to an area other than the gaze area and displaying same through a glass member according to an embodiment.
FIG. 9 is a diagram illustrating a wearable electronic device synthesizing an image corresponding to a gaze area of a user and an image corresponding to an area other than the gaze area and displaying same through a glass member according to an embodiment.

### [Mode for Carrying out the Invention]

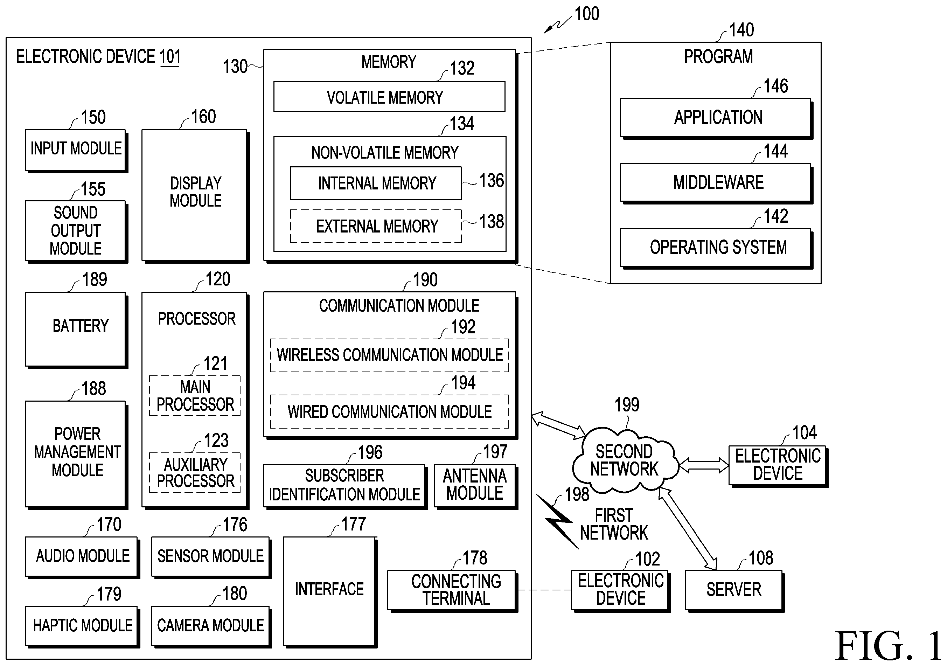

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

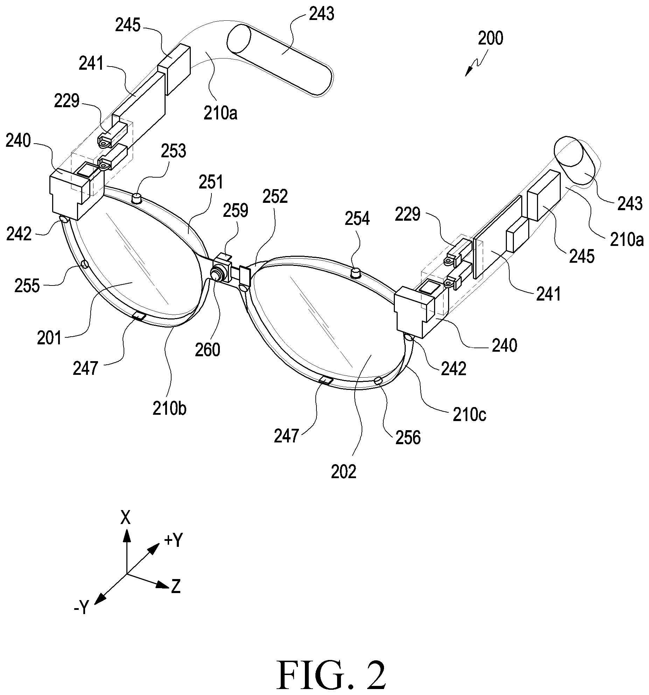

FIG. 2 is a perspective diagram illustrating an inner configuration of a wearable electronic device according to an embodiment.

Referring to FIG. 2, the wearable electronic device 200 according to an embodiment may include components which are received in a housing 210a, 210b, or 210c, disposed on housing 210a, 210b, or 210c, and/or exposed through an opening disposed on the housing 210a, 210b, or 210c.

According to an embodiment, the wearable electronic device 200 may acquire a visual image of an object or an environment in a direction (e.g., the -Y direction) that a user is looking at or the wearable electronic device (200) is facing, by using multiple camera modules 253, 254, 255, and 256. Camera modules 253 and 254 may be disposed on relatively upper portions of housings 210b and 210c (or exposed through an opening disposed on the housings 210b and 210c). The camera modules 253 and 254 may capture an image corresponding to a field of view (FOV) relative to at least one point on the housings 210b and 210c, such as a FOV corresponding to a relative upward side when the user is wearing the wearable electronic device 200. The image acquired by the camera modules 253 and 254 may be used, for example, for simultaneous localization and mapping (SLAM) and/or 6 degrees of freedom (6DoF), and/or for recognition and/or tracking of objects corresponding to the FOV. The image acquired by the camera modules 253 and 254 may be used for head tracking.

According to an embodiment, camera modules 255 and 256 may be disposed on relatively lower portions of housings 210b and 210c (or exposed through an opening disposed on the housings 210b and 210c). Here, the upper portion corresponding to the camera module 253 and 254 and the lower portion corresponding to the camera module 255 and 256 are defined when the user is wearing the wearable electronic device 200, and it will be understood by those skilled in the art that the portion relatively close to the ground is referred to as the lower portion, and the portion relatively farther from the ground is referred to as the upper portion, for convenience of description only. The camera modules 255 and 256 may capture an image corresponding to a FOV relative to at least one point on the housings 210b and 210c, such as a FOV corresponding to a relative downward side when the user is wearing the wearable electronic device 200. The image acquired by the camera modules 255 and 256 may be used for recognition and/or tracking for an object corresponding to the FOV. For example, the image acquired by the camera modules 255 and 256 may, in case that the user is wearing the wearable electronic device 200, be used for, but without limitation to, recognition and/or tracking for a subject disposed relatively lower than a portion corresponding to the head, for example, a hand of the user.

According to an embodiment, the wearable electronic device 200 may perform recognition and/or tracking of a subject, by using at least one image captured by the camera modules 253, 254, 255, and 256. The wearable electronic device 200 may perform an operation identified based on a result of the recognition and/or tracking, and provide a visual object at a position corresponding to the subject, but there is not limitation to the operation. For example, in case that the wearable electronic device 200 provides a virtual keyboard, based on the result of the tracking of the hand of the user, designated keys may be recognized in the virtual keyboard. The operation corresponding to the result of the recognition and/or tracking may be independently performed by the wearable electronic device 200, but this is illustrative, and the operation may be performed based on a cooperation of the wearable electronic device 200 and an external electronic device (e.g., the electronic device 102, the electronic device 104, and/or the server 108 in FIG. 1).

According to an embodiment, the camera modules 253, 254, 255, and 256 are used for head tracking, hand detection, hand tracking, and/or spatial recognition in 3DoF or 6DoF, and may be a global shutter (GS) camera, but is not limited thereto, and may be implemented as a rolling shutter (RS) camera.

According to an embodiment, the camera modules 251 and 252 may be eye tracking (ET) cameras, and the images captured by the camera modules 251 and 252 may be used for detecting and/or tracking pupils. For example, using the captured image, a position of a virtual image projected on the wearable electronic device 200 may be determined such that the pupil of the wearer of the wearable electronic device 200 is positioned in accordance with the direction of gaze. The camera modules 251 and 252 may be implemented as a GS camera for detecting and/or tracking the pupil but has no limitation.

According to an embodiment, the display module 240 may include, for example, a liquid crystal display (LCD), a digital mirror device (DMD), a liquid crystal on silicon (LCoS), a light emitting diode (LED) on silicon (LEDoS), an organic light emitting diode (OLED), or a micro light emitting diode (micro-LED). Although not shown in the drawings, in case that the display module 240 includes one of a liquid crystal display, a digital mirror display device, or a liquid crystal on silicon, the wearable electronic device 200 may include a light source configured to emit light to a screen output area of the display module 240. In an embodiment, in case that the display module 240 is capable of generating light on its own, for example, include one of an organic light emitting diode or a micro-LED, the wearable electronic device 200 may provide a virtual image of good quality to the user even if the wearable electronic device does not include a separate light source. According to an embodiment, in case that the display panel module 240 is implemented as an organic light emitting diode or micro-LED, a light source is unnecessary and thus the wearable electronic device 200 may become lighter in terms of weight. The wearable electronic device 200 may include the display module 240, a first transparent member 201, and/or a second transparent member 202, and the user may use the wearable electronic device 200 while wearing the wearable electronic device. The first transparent member 201 and/or the second transparent member 202 may include a glass plate, a plastic plate, or a polymer, and may be manufactured transparent or translucent. An optical waveguide may transfer a light source generated by the display module 240 to the user's eye. The optical waveguide may be formed of glass, plastic, or a polymer, and may include a nanopattern, for example, a grating structure having a polygonal or curved surface shape disposed on a surface inside or outside. According to an embodiment, light incident on one end of the waveguide may be propagated inside the display optical waveguide by the nanopattern and provided to the user. In addition, the optical waveguide including a free-form type prism may provide incident light to the user through a reflection mirror. The optical waveguide may include at least one of a diffraction element (e.g., a diffractive optical element (DOE) and a holographic optical element (HOE)) or a reflection element (e.g., a reflective mirror). The optical waveguide may guide light of the display emitted from a light source to the user's eye by using at least one diffractive element or reflective element. According to various embodiments, the diffractive element may include an input optical member /output optical member (not shown). By way of example, the input optical member (not shown) may indicate an input grating area and the output optical member (not shown) may indicate an output grating area. The input grating area may serve as an input terminal that diffracts (or reflects) light output from a light source (e.g., a micro-LED) to transmit the light to the transparent member (e.g., the first transparent member 201, and the second transparent member 202) of a screen display part. The output grating area may serve as an outlet that diffracts (or reflects) the light having been transferred to the transparent member (e.g., the first transparent member 201 and the second transparent member 202) of the waveguide (the optical waveguide) to the user's eyes. According to various embodiments, the reflection element may include a total internal reflection (TIR) optical element or a total internal reflection waveguide for total internal reflection. For example, the total internal reflection corresponds to a method of guiding light and may indicate creating an incidence angle so that light (e.g., a virtual image) input through the input grating area is 100% reflected from one surface (e.g., a predetermined surface) of the waveguide, and is 100% transferred to the output grating area. **In** an embodiment, the light output from the display module 240 may have a light path guided to the waveguide through the input optical member. The light traveling inside the waveguide may be guided to the user's eye through the output optical member. The screen display part may be determined based on the light output to the eye. According to an embodiment, the first transparent member 201 may be disposed to face the right eye of the user and the second transparent member 202 may be disposed to face the left eye of the user. According to various embodiments, in case that the display module 240 is transparent, the display module may be disposed at a location facing the user's eye to configure the screen display part. The wearable electronic device 200 may further include a lens. The lens may adjust the focus of the screen output to the display module 240 so that it is visible to the user's eyes. For example, the lens may include a Fresnel lens, a pancake lens, a multi-channel lens, or the like.

According to an embodiment, a circuit board 241 may include components for driving the wearable electronic device 200. For example, the circuit board 241 may include at least one integrated circuit chip and at least one of the processor 120, memory (e.g., the memory 130 in FIG. 1), a power management module (e.g., the power management module 188/the battery 189 in FIG. 1), or a communication module (e.g., the communication module 190 in FIG. 1) may be provided on the integrated chip. According to an embodiment, the circuit board 241 may be disposed inside the housing 210a. According to an embodiment, the circuit board 241 may be electrically connected to the battery 243 through the power transfer structure. According to an embodiment, the circuit board 241 may be connected to a flexible printed circuit board and may transfer an electrical signal to a light source and electronic components (e.g., the display module 240 and the camera module 251, 252, 253, 254, 255, 256, 259, and 260) of an electronic device through the flexible printed circuit board. According to an embodiment, the circuit board 241 may include a circuit board including an interposer.

According to an embodiment, the battery 243 may be electrically connected to components of the wearable electronic device 200 through the power transfer structure and may supply power to the components of the wearable electronic device 200. According to an embodiment, at least a portion of the battery 243 may be disposed in a wearing member.

According to an embodiment, the speaker module 245 may convert an electrical signal into a sound. The speaker module 245 according to an embodiment may be disposed inside the housing 210a, 210b, or 210c. According to an embodiment, the speaker module 245 may be disposed between the circuit board 241 and the battery 243 to correspond to the user's ear. The speaker module 245 according to an embodiment may also transmit auditory information to the user through low-frequency vibrations in the user's skin and bones.

According to an embodiment, a microphone module 247 may convert a sound into an electrical signal. According to an embodiment, the microphone module 247 may be disposed on at least a portion of the housing 210b or 210c.

According to an embodiment, the wearable electronic device 200 may recognize a voice of the user and/or an external sound by using at least one microphone module 247. According to an embodiment, the wearable electronic device 200 may distinguish voice information and peripheral noise based on voice information and/or additional information (e.g., a low-frequency vibration of the user's skin and bones) acquired through the at least one microphone module 247. For example, the wearable electronic device 200 may clearly recognize the user's voice and perform a function (e.g., noise canceling) for reducing peripheral noise.

According to an embodiment, the camera module 259 may include an infrared (IR) camera module (e.g., a time of flight (TOF) camera or structured light camera). For example, the IR camera may operate as at least a portion of a sensor module (e.g., a sensor module or a light detection and ranging (LiDAR) sensor) for detecting a distance to a subject. According to an embodiment, the wearable electronic device 200 may further include a sensor module (e.g., the LiDAR sensor). For example, the sensor module may include at least one of a vertical cavity surface emitting laser (VCSEL), an infrared sensor, and/or a photodiode.

An LED 242 (e.g., an illumination LED) may have variety of uses depending on a location to which the LED is attached. By way of example, the LED 242 attached to the housing 210b or 210c may be used as an auxiliary component for facilitating gaze detection when tracking a movement of the eye by using the camera module 251 or 252 and an IR LED with infrared wavelengths is mainly used therefor. For another example, the LEDs 242 may be attached around the hinge 229 that connects the housing 210b or 210c of the transparent members 201 or 202 to the housing 210a of the temple (eyeglasses leg portion), or adjacent to the camera module, as a component of supplementing ambient brightness during camera capture. The camera module 260 for photographing may capture an image with respect to the foreground of the wearable electronic device 200 of relatively high-quality, for example.

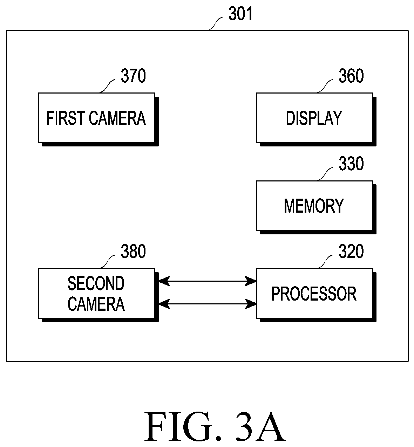

FIG. 3A is a schematic block diagram illustrating a configuration of a wearable electronic device according to an embodiment.

According to an embodiment, the wearable electronic device 301 (e.g., the electronic device 101 in FIG. 1, or the wearable electronic device 200 in FIG. 2) may include a processor 320, memory 330, a first camera 370, a second camera 380, and a display 360.

According to an embodiment, the wearable electronic device 301 may display an augmented reality (AR) image through the display 360. For example, the wearable electronic device 301 may display information associated with a real thing (or, object) as a virtual object (e.g., an AR image) around the real thing. For example, the user wearing the wearable electronic device 301 may see the virtual image (or virtual object) displayed by the wearable electronic device 301 together with the real space through the display 360 (e.g., the display module 160 in FIG. 1 or the display module 240 in FIG. 2) configured to display a content or object through a glass member (e.g., the first transparent member 201 or the second transparent member 202 in FIG. 2). By way of example, the wearable electronic device 301 may be realized as smart glasses or a head-mounted display device.

According to an embodiment, the processor 320 may control general operations of the electronic device 301. By way of example, the processor 320 may be implemented identical or similar to the processor 120 in FIG. 1.

According to an embodiment, the display 360 may be implemented identical or similar to the display module 160 in FIG. 1. According to an embodiment, the display 360 may be implemented identical or similar to the display module 240 in FIG. 2. According to an embodiment, the display 360 may display a content or an object according to control of the processor 320. For example, in case that the wearable electronic device 301 is implemented as smart glasses, the display 360 may be implemented as a light output device configured to display a content or an object through the glass member.

According to an embodiment, the processor 320 may, in a state where the wearable electronic device 301 is worn by the user, identify a gaze area of the user through the first camera 370. According to an embodiment, the first camera module 370 may capture the eye of the user. According to an embodiment, the processor 320 may identify the gaze area of the user, based on the image generated by photographing the user's eye. According to an embodiment, the first camera 370 may be implemented as a gaze tracking camera (eye tracking camera (ET camera)) for identifying the gaze of the user. For example, the first camera 370 may be implemented identical or similar to the camera module 180 in FIG. 1 and/or the camera module 251 or 252 in FIG. 2.

According to an embodiment, the processor 320 may acquire an image having a first resolution generated by photographing an external object, through the second camera 380. According to an embodiment, the second camera 380 may capture an external object according to control of the processor 320. According to an embodiment, the first resolution may be a resolution preconfigured by the processor 320 or the user from among the resolutions supported by the second camera 380. By way of example, the first resolution may correspond to a maximum resolution (or full resolution) supported by the second camera 380. For example, the second camera 380 may be implemented identical or similar to the camera module 180 in FIG. 1 and/or the camera module 253, 254, 255, 256, or 260 in FIG. 2. According to an embodiment, the processor 320 may control data for the image of the first resolution to be stored in volatile memory included in the second camera 380.

According to an embodiment, the processor 320 may determine, in the image acquired through the second camera 380, a first area corresponding to the gaze area of the user and a second area corresponding to an area other than the gaze area. Alternatively, depending on implementation, the first area and the second area may be determined by the second camera 380. Here, the second camera 380 may determine the first area and the second area, based on the gaze area of the user identified by the processor 320.

According to an embodiment, the processor 320 may acquire a first image corresponding to the first area (an area corresponding to the gaze area) having the first resolution from the image of the first resolution through a first channel among multiple channels between the processor 320 and the second camera 380.

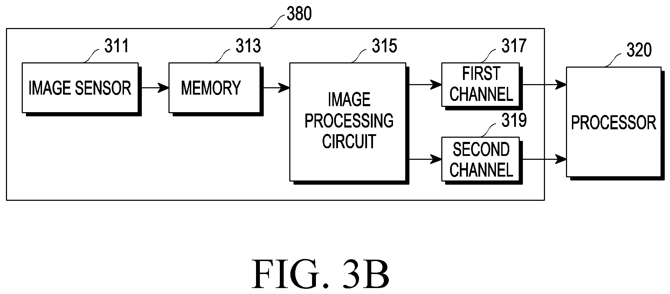

According to an embodiment, the processor 320 may control an image processing circuit (e.g., the image processing circuit 315 in FIG. 3B) included in the second camera 380 to read the data for the image having the first resolution from the volatile memory so as to perform binning of the second area with a second resolution. According to an embodiment, the second resolution may be lower than the first resolution. According to an embodiment, the processor 320 may acquire a second image corresponding to the second area having the second resolution from the image through a second channel among multiple channels between the processor 320 and the second camera 380.

According to an embodiment, the processor 320 may acquire the first image corresponding to the first area and the second image corresponding to the second area in parallel through the first channel and the second channel. Alternatively, depending on implementation, the processor 320 may sequentially acquire the first image and the second image.

According to an embodiment, the first channel and the second channel may be different from each other. According to an embodiment, each of the first channel and the second channel may be implemented as a physically separate channel. Alternatively, each of the first channel and the second channel may be implemented as a logically separate channel (e.g., a virtual channel).

According to an embodiment, the processor 320 may divide the second area into multiple areas. According to an embodiment, the processor 320 may divide the second area into multiple areas, based on a distance from the first area corresponding to the gaze area. According to an embodiment, the processor 320 may control the second camera 380 to perform binning of the multiple areas with different resolutions. According to an embodiment, the binning may be performed such that a portion of the second area located at a relatively short distance from the first area has a relatively higher resolution than a portion of the second area located at a relatively long distance from the first area.

According to an embodiment, the processor 320 may acquire the first image and the second image in parallel through the first channel and the second channel. For example, the processor 320 may concurrently or sequentially acquire the first image and the second image.

According to an embodiment, the first channel may include a channel associated with an improved inter integrated circuit (I3C). The second channel may include a channel associated with a mobile industry processor interface (MIPI).

According to an embodiment, the first channel may include a first virtual channel associated with a mobile industry processor interface (MIPI). According to an embodiment, the second channel may include a second virtual channel associated with a mobile industry processor interface (MIPI).

According to an embodiment, the processor 320 may acquire a third image in which the first image and the second image are merged. By way of example, the third image may correspond to an image including an external object captured through the second camera 380. For example, the third image may be an image in which the second area different from the user's gaze area in the image is binned at a relatively low resolution (e.g., the second resolution). According to an embodiment, the processor 320 may control the display 360 to display the third image through the glass member (e.g., the first transparent member 201 and the second transparent member 202 in FIG. 2).

According to the method described above, the processor 320 may rapidly acquire the first image and the second image processed through the second camera 380. As such, the processor 320 may display the third image on the display 360 without a frame delay.

FIG. 3B is a schematic block diagram illustrating a configuration of a second camera according to an embodiment.

According to an embodiment, the second camera 380 may include an image sensor 311, memory 313, an image processing circuit 315, a first channel 317, and the second channel 319.

According to an embodiment, the image sensor 311 may convert light emitted or reflected from a subject (external object) and transferred through a lens into an electrical signal, thereby acquiring an image having the first resolution and corresponding to the subject. According to an embodiment, the image sensor 311 may include one image sensor selected from image sensors having different attributes, such as an RGB sensor, a black and white (BW) sensor, an IR sensor, or a UV sensor, multiple image sensors having the same attribute, or multiple image sensors having different attributes. Each image sensor included in the image sensor 311 may be implemented as, for example, a charged coupled device sensor (CCD) or a complementary metal oxide semiconductor (CMOS) sensor.

According to an embodiment, the memory 313 may store data for the image of the first resolution. According to an embodiment, the memory 313 may include volatile memory. According to an embodiment, the memory 313 may include dynamic random-access memory (DRAM).

According to an embodiment, the image processing circuit 315 may read data about the image (e.g., an entire image) of the first resolution stored in the memory 313. According to an embodiment, the image processing circuit 315 may perform defective pixel correction (DPC), frame white balance, and/or noise reduction. According to an embodiment, the image processing circuit 315 may acquire the first image corresponding to the first area (e.g., the gaze area of the user) from the entire image by using the read data. According to an embodiment, the image processing circuit 315 may perform binning on the second area (e.g., the area other than the gaze area) with the second resolution lower than the first resolution from the entire image by using the read data. According to an embodiment, the image processing circuit 315 may acquire the second image corresponding to the second area, based on the binned image.

According to an embodiment, the image processing circuit 315 may be connected to the processor 320 through the first channel 317 and/or the second channel 319. According to an embodiment, the first channel 317 and the second channel 319 may be different from each other.

According to an embodiment, the image processing circuit 315 may transmit the first image having the first resolution and corresponding to the first area to the processor 320 through the first channel 317. According to an embodiment, the image processing circuit 315 may transmit the second image having the second resolution and corresponding to the second area to the processor 320 through the second channel 319. According to an embodiment, the image processing circuit 315 may transmit the first image and the second image in parallel to the processor 320 through the first channel 317 and the second channel 319.

According to an embodiment, the first channel 317 may include a channel associated with an improved inter integrated circuit (I3C). According to an embodiment, the second channel 319 may include a channel associated with a mobile industry processor interface (MIPI). According to an embodiment, each of the first channel 317 and the second channel 319 may be implemented as a logically separate channel (e.g., a virtual channel). According to an embodiment, the first channel 317 may include a first virtual channel associated with a mobile industry processor interface (MIPI), and the second channel 319 may include a second virtual channel associated with an MIPI.

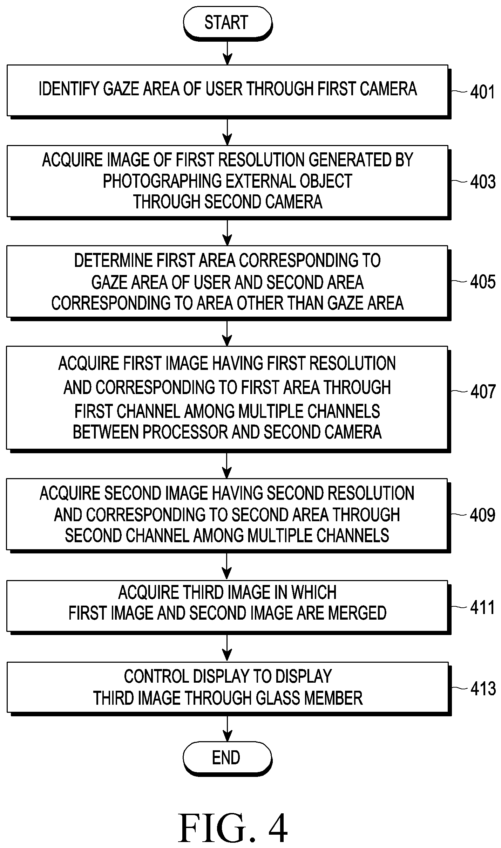

Operations of the wearable electronic device 301 described below with reference to FIG. 4 may be performed by the processor 320. However, for convenience of explanation, the operations performed by the processor 320 will be described as being performed by the wearable electronic device 301.

FIG. 4 is a flowchart illustrating an operation method of a wearable electronic device according to an embodiment.

According to an embodiment, in operation 401, the wearable electronic device 301 (e.g., the wearable electronic device 301 in FIG. 3A) may identify a gaze area of the user through a first camera 370 (e.g., the first camera 370 in FIG. 3A). According to an embodiment, the first camera 370 may, in a state where the wearable electronic device 301 is worn by the user, capture the user's eye. According to an embodiment, the wearable electronic device 301 may identify the gaze area of the user, based on the image generated by photographing the user's eye. According to an embodiment, the first camera 370 may be implemented as a gaze tracking camera (eye tracking camera (ET camera)) for identifying the gaze of the user.

According to an embodiment, in operation 403, the wearable electronic device 301 may acquire an image having a first resolution generated by photographing an external object, through a second camera 380 (e.g., the second camera 380 in FIG. 3A). According to an embodiment, the first resolution may be a resolution preconfigured by the processor 320 or the user from among the resolutions supported by the second camera 380.

According to an embodiment, in operation 405, the wearable electronic device 301 may determine a first area corresponding to the gaze area of the user and a second area corresponding to an area other than the gaze area. According to an embodiment, the first area and the second may be different areas.

According to an embodiment, in operation 407, the wearable electronic device 301 may acquire a first image corresponding to the first area having the first resolution through a first channel 317 among multiple channels between the processor 320 and the second camera 380. According to an embodiment, the multiple channels may include physically separated channels, or may include virtually separated channels.

According to an embodiment, in operation 409, the wearable electronic device 301 may acquire a second image corresponding to the second area having the second resolution through a second channel 319 among multiple channels. According to an embodiment, the second resolution may be lower than the first resolution. According to an embodiment, the first channel 317 and the second channel 319 may include different channels. According to an embodiment, the wearable electronic device 301 may acquire the first image and the second image in parallel through the first channel 317 and the second channel 319. For example, the processor 320 may concurrently or sequentially acquire the first image and the second image.

According to an embodiment, the first channel 317 may include a channel associated with an improved inter integrated circuit (I3C). The second channel 319 may include a channel associated with a mobile industry processor interface (MIPI).

According to an embodiment, each of the first channel 317 and the second channel 319 may be implemented as a logically separate channel. According to an embodiment, the first channel 317 may include a first virtual channel associated with a mobile industry processor interface (MIPI). According to an embodiment, the second channel 319 may include a second virtual channel associated with a mobile industry processor interface (MIPI).

According to an embodiment, although it is described that operation 409 is performed after operation 407, it is also possible to perform operation 407 after operation 409, and it is also possible to perform operation 407 and operation 409 simultaneously.

According to an embodiment, in operation 411, the wearable electronic device 301 may acquire a third image in which the first image and the second image are merged.

According to an embodiment, in operation 413, the wearable electronic device 301 may control the display 360 to display the third image through the glass member (e.g., the first transparent member 201 and the second transparent member 202 in FIG. 2). By way of example, the third image may correspond to an image including an external object captured through the second camera 380. For example, the third image may be an image in which the second area different from the user's gaze area in the image is binned at a relatively low resolution (e.g., the second resolution).

According to an embodiment, the wearable electronic device 301 may perform binning on an image corresponding to an area other than the gaze area of the user and cause the resolution of an image corresponding to the gaze area of the user to be relatively high.

According to an embodiment, the wearable electronic device 301 may perform binning on the image corresponding to an area other than the gaze area of the user to reduce the amount of data, thereby relatively reducing the current consumption of the wearable electronic device 301.

According to an embodiment, the image processing circuit 315 may transmit an image corresponding to the gaze area of the user and an image corresponding to an area other than the gaze area of the user to the processor 330 through different channels, so that the wearable electronic device 301 does not experience a frame delay, thereby relatively reducing the degradation of the frame rate.

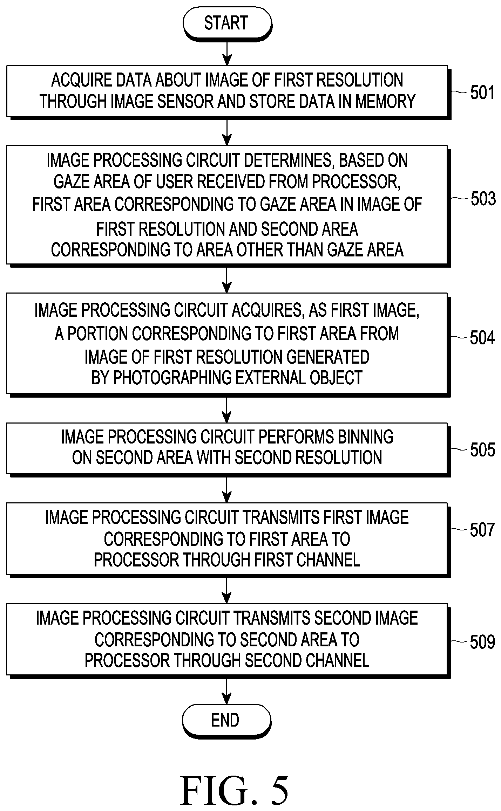

Operations of the wearable electronic device 301 described below with reference to FIG. 5 may be performed by the second camera 380. However, for convenience of explanation, the operations performed by the second camera 380 will be described as being performed by the wearable electronic device 301.

FIG. 5 is a flowchart illustrating an operation method of a wearable electronic device according to an embodiment.

According to an embodiment, in operation 501, the wearable electronic device 301 (e.g., the wearable electronic device 301 in FIG. 3A) may acquire data for the image of the first resolution generated by photographing an external object through the image sensor 311 (e.g., the image sensor 311 in FIG. 3B) and store the data in the memory 313 (e.g., the memory 313 in FIG. 3B). According to an embodiment, the second camera 380 may include the memory 313. According to an embodiment, the memory 313 may be implemented as volatile memory. According to an embodiment, the memory 313 may be implemented as dynamic random-access memory (DRAM). However, the types of memory are merely illustrative, and the memory 313 may be implemented with various types of memory.

According to an embodiment, in operation 503, based on the gaze area of the user received from the processor 320 (e.g., the processor 320 in FIG. 3A), the image processing circuit 315 (e.g., the image processing circuit 315 in FIG. 3B) may determine the first area corresponding to the image of the first resolution and the second area corresponding to the area other than the gaze area. According to an embodiment, the processor 320 may, based on identifying of the gaze area of the user through the first camera 370, transmit data (e.g., coordinates or the like) associated with the gaze area to the image processing circuit 315.

According to an embodiment, in operation 504, the image processing circuit 315 may acquire, as the first image, only a portion corresponding to the first area in the image (e.g., the entire image) of the first resolution generated by photographing an external object. According to an embodiment, the image processing circuit 315 may read data about the image (e.g., an entire image) of the first resolution stored in the memory 313. According to an embodiment, the image processing circuit 315 may acquire the first image corresponding to the first area (e.g., the gaze area of the user) from the entire image by using the read data.

According to an embodiment, in operation 505, the image processing circuit 315 (e.g., the image processing circuit 315 in FIG. 3B) may perform binning on the second area with the second resolution. According to an embodiment, the second resolution may be lower than the first resolution. According to an embodiment, the image processing circuit 315 may read data for the image of the first resolution stored in the memory 313 and perform binning on the image of the first resolution corresponding to the second area with the second resolution. According to an embodiment, the image processing circuit 315 may acquire, as the second image, only a portion corresponding to the binned second area in the image (e.g., the entire image) of the first resolution generated by photographing an external object.

According to an embodiment, in operation 507, the image processing circuit 315 may transmit the first image corresponding to the first area to the processor 320 through the first channel 317 (e.g., the first channel 317 in FIG. 3B).

According to an embodiment, in operation 509, the image processing circuit 315 may transmit the second image corresponding to the second area to the processor 320 through the second channel 319 (e.g., the second channel 319 in FIG. 3B). According to an embodiment, the first channel 317 and the second channel 319 may be different from each other.

According to an embodiment, the first channel 317 may include a channel associated with an improved inter integrated circuit (I3C). The second channel 319 may include a channel associated with a mobile industry processor interface (MIPI).

According to an embodiment, the first channel 317 may include a first virtual channel associated with a mobile industry processor interface (MIPI). According to an embodiment, the second channel 319 may include a second virtual channel associated with a mobile industry processor interface (MIPI).

According to an embodiment, the image processing circuit 315 may transmit the first image and the second image in parallel to the processor 320 through the first channel 317 and the second channel 319. For example, the processor 320 may concurrently or sequentially acquire the first image and the second image.

According to an embodiment, although it is described that operation 509 is performed after operation 507, it is also possible to perform operation 507 after operation 509, and it is also possible to perform operation 509 and operation 507 simultaneously.

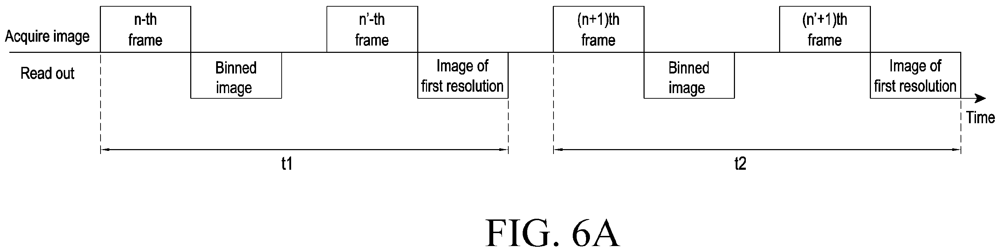

FIG. 6A is a diagram illustrating an operation of a conventional wearable electronic device to acquire an image corresponding to a gaze area of a user and an image corresponding to an area other than the gaze area according to a comparative example.

According to the comparative example, read out may refer to the image processing circuit transmitting an image (or, frame) to the processor. According to the comparative example, a first time interval t1 may refer to a time interval during which the image processing circuit transmits, to the processor, an image (or, frame) (e.g., the image of the first resolution) corresponding to a gaze area of an n-th frame (e.g., n is a natural number) and an image (or, frame) (e.g., a binned image) corresponding to an area other than a gaze area of the n'-th frame (e.g., n' is a natural number). For example, the n'-th frame may refer to a binned image (or, frame) of the n-th frame.

According to the comparative example, a second time interval t2 may refer to a time interval during which the image processing circuit transmits, to the processor, an image (or, frame) (e.g., the image of the first resolution) corresponding to a gaze area of an (n+1)th frame and an image (or, frame) (e.g., a binned image) (e.g., n' is a natural number) corresponding to an area other than a gaze area of an (n'+1)th frame. For example, the (n'+1)th frame may refer to a binned image (or, frame) of the (n+1)th frame.

According to the comparative example, acquiring an image may refer to acquiring a frame (or, image) by exposure.

According to the comparative example, after the n-th frame (or, image) is acquired through exposure, the wearable electronic device may acquire an image (e.g., a binned image) corresponding to an area other than the gaze area through the channel. According to the comparative example, after the n'-th frame is acquired through exposure, the wearable electronic device may acquire an image (e.g., an image of the first resolution) corresponding to the gaze area through the channel.

According to the comparative example, since the wearable electronic device transmits an image corresponding to the gaze area for the n-th frame acquired through the camera and the image corresponding to the area other than the gaze area for the n'-th frame, two transmission operations need to be performed to transmit multiple images having different resolutions to the processor.

According to the comparative example, the processor of the wearable electronic device acquired images corresponding to the gaze area and the area other than the gaze area through an identical channel, which may result in frame delays. That is, the degradation of the frame rate may be caused due to the frame delay.

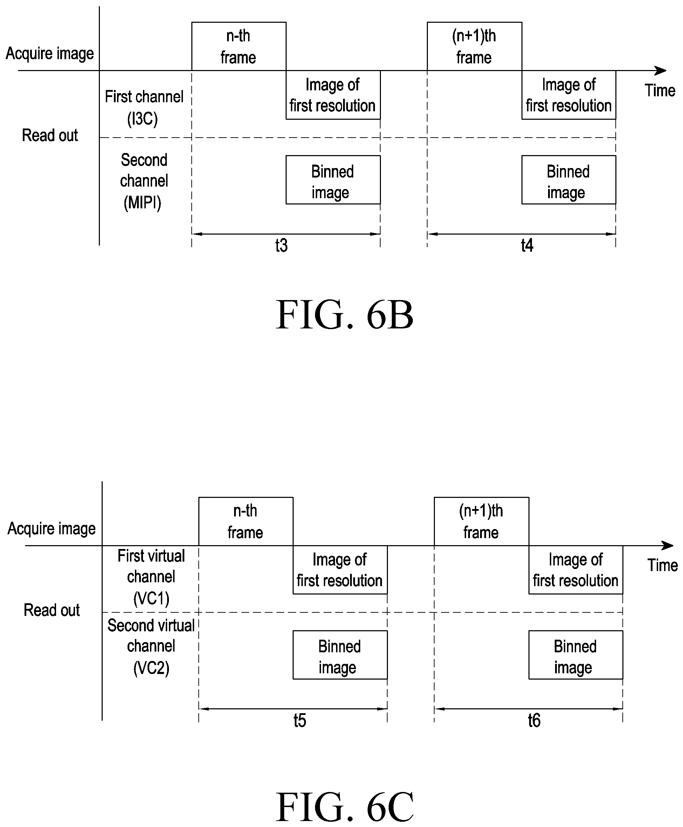

FIG. 6B is a diagram illustrating an operation of a wearable electronic device to acquire an image corresponding to a gaze area of a user and an image corresponding to an area other than the gaze area according to an embodiment.

According to an embodiment, acquiring an image may refer to an operation of acquiring a frame (or, image) through exposure through the image sensor 311 included in the second camera 380.

According to an embodiment, read out may refer to an operation of the image processing circuit 315 transmitting an image (or, frame) to the processor 320. According to an embodiment, a first time interval t3 may refer to a time interval during which the image processing circuit 315 transmits, to the processor 320, an image (or, frame) (e.g., a binned image) corresponding to an area other than a gaze area of an n-th frame (e.g., n is a natural number) and an image (or, frame) (e.g., an image of the first resolution) corresponding to a gaze area of the n-th frame through the first channel I3C (e.g., the first channel 317 in FIG. 3B) and the second channel MIPI (e.g., the second channel 319 in FIG. 3B). According to an embodiment, a second time interval t4 may refer to a time interval during which the image processing circuit 315 transmits, to the processor 320, an image (or, frame) (e.g., a binned image) corresponding to an area other than a gaze area of an (n+1)th frame and an image (or, frame) (e.g., an image of the first resolution) corresponding to a gaze area of the (n+1)th frame through the first channel I3C and the second channel MIPI.

According to an embodiment, the first channel I3C may include a channel associated with an improved inter integrated circuit (I3C). According to an embodiment, the second channel MIPI may include a channel associated with a mobile industry processor interface (MIPI). For example, each of the first channel I3C and the second channel MIPI may be a physically separate channel.

According to an embodiment, the image processing circuit 315 may transmit the image (or, frame) (e.g., the image of the first resolution) corresponding to the gaze area to the processor 320 through the first channel I3C. According to an embodiment, the image processing circuit 315 may transmit the image (or, frame) (e.g., the binned image) corresponding to the area other than the gaze area to the processor 320 through the second channel MIPI.

According to an embodiment, the image processing circuit 315 may transmit the image (e.g., the image of the first resolution) corresponding to the gaze area and the image (e.g., the binned image) corresponding to the area other than the gaze area in parallel through the first channel I3C and the second channel MIPI, respectively. According to an embodiment, the binned image may be an image having a resolution lower than the image of the first resolution.

According to an embodiment, the first time interval t3 may be shorter than the first time interval t1 shown in FIG. 6A, and the second time interval t4 may be shorter than the second time interval t2 shown in FIG. 6A. According to an embodiment, the wearable electronic device 301 may minimize the frame delay so as to reduce the degradation of the frame rate.

FIG. 6C is a diagram illustrating an operation of a wearable electronic device to acquire an image corresponding to a gaze area of a user and an image corresponding to an area other than the gaze area according to an embodiment.

According to an embodiment, a first time interval t5 may refer to a time interval during which the image processing circuit 315 (e.g., the image processing circuit 315 in FIG. 3B) transmits, to the processor 320, an image (or, frame) (e.g., an image of the first resolution) corresponding to a gaze area of an n-th frame (e.g., n is a natural number) and an image (or, frame) (e.g., a binned image) corresponding to an area other than the gaze area of the n-th frame through a first virtual channel VC1 and a second virtual channel VC2. According to an embodiment, a second time interval t6 may refer to a time interval during which the image processing circuit 315 transmits, to the processor 320, an image (or, frame) (e.g., an image of the first resolution) corresponding to a gaze area of an (n+1)th frame and an image (or, frame) (e.g., a binned image) corresponding to an area other than the gaze area of the (n+1)th frame through the first virtual channel VC1 and the second virtual channel VC2.

According to an embodiment, the first virtual channel VC1 and the second virtual channel VC2 may include a virtual channel associated with a mobile industry processor interface (MIPI). For example, each of the first virtual channel VC1 and the second virtual channel VC2 may be a physically separate channel (or virtual channel).

According to an embodiment, the image processing circuit 315 may transmit the image (or, frame) (e.g., the image of the first resolution) corresponding to the gaze area to the processor 320 through the first virtual channel VC1. According to an embodiment, the image processing circuit 315 may transmit the image (or, frame) (e.g., the binned image) corresponding to the area other than the gaze area to the processor 320 through the second virtual channel VC2.

According to an embodiment, the image processing circuit 315 may transmit the image (e.g., the image of the first resolution) corresponding to the gaze area and the image (e.g., the binned image) corresponding to the area other than the gaze area in parallel through the first virtual channel VC1 and the second virtual channel VC2. According to an embodiment, the binned image may be an image having a resolution lower than the image of the first resolution.

According to an embodiment, the first time interval t5 may be shorter than the first time interval t1 shown in FIG. 6A, and the second time interval t6 may be shorter than the second time interval t2 shown in FIG. 6A. According to an embodiment, the wearable electronic device 301 may minimize the frame delay so as to reduce the degradation of the frame rate.

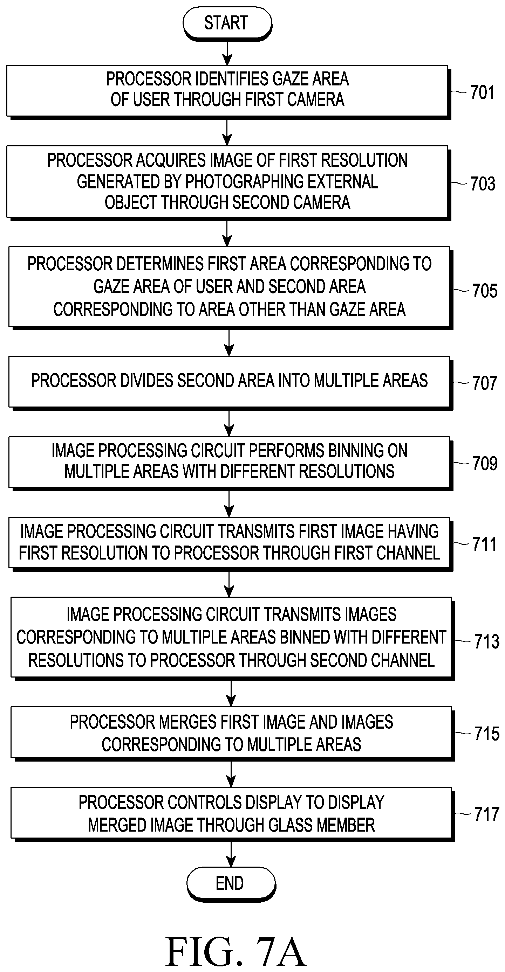

FIG. 7A is a flowchart illustrating an operation method of a wearable electronic device according to an embodiment.

According to an embodiment, in operation 701, the processor 320 may identify a gaze area of the user through the first camera 370 (e.g., the first camera 370 in FIG. 3A).

According to an embodiment, in operation 703, the processor 320 may acquire an image having a first resolution generated by photographing an external object, through the second camera 380 (e.g., the second camera 380 in FIG. 3A).

According to an embodiment, in operation 705, the processor 320 may determine a first area corresponding to the gaze area of the user and a second area corresponding to an area other than the gaze area.

According to an embodiment, in operation 707, the processor 320 may divide the second area into multiple areas. According to an embodiment, the processor 320 may divide the second area into multiple areas, based on a distance from the first area. For example, the processor 320 may divide an area in a relatively short distance from the first region as a third area and an area in a relatively long distance from the first region as a fourth area. However, the division into multiple areas based on distance is merely an example, and embodiments are not limited thereto and may use various other methods to divide into multiple areas.

According to an embodiment, in operation 709, the image processing circuit 315 may perform binning on the multiple areas with different resolutions. According to an embodiment, the image processing circuit 315 may perform binning such that an area relatively closer to the first area has a resolution relatively higher than that of an area relatively farther from the first area. For example, the image processing circuit 315 may perform binning on an image corresponding to the third area with the second resolution lower than the first resolution. The image processing circuit 315 may perform binning on an image corresponding to the fourth area with a third resolution lower than the second resolution.

According to an embodiment, in operation 711, the image processing circuit 315 may transmit the first image having the first resolution and corresponding to the first area to the processor 320 through the first channel (e.g., the first channel 317 in FIG. 3B). According to an embodiment, the first channel 317 may include a channel associated with an improved inter integrated circuit (I3C). Alternatively, the first channel 317 may include a first virtual channel associated with a mobile industry processor interface (MIPI).

According to an embodiment, in operation 713, the image processing circuit 315 may transmit the image corresponding to multiple areas binned with different resolutions to the processor 320 through the second channel (e.g., the second channel 319 in FIG. 3B). According to an embodiment, the second channel 319 may refer to a channel different from the first channel 317. According to an embodiment, in case that the first channel 317 is implemented as a channel associated with an improved inter integrated circuit (I3C), the second channel 319 may include a channel associated with a mobile industry processor interface (MIPI). Alternatively, in case that the first channel 317 is implemented as a first virtual channel associated with an MIPI, the second channel 319 may include a second virtual channel associated with an MIPI. According to an embodiment, the image processing circuit 315 may transmit an image corresponding to the third area to the processor 320 through the second channel 319. Thereafter, the image processing circuit 315 may transmit an image corresponding to the fourth area to the processor 320 through the second channel 319.

According to an embodiment, although it is described that operation 713 is performed after operation 711, it is also possible to perform operation 711 after operation 713, and it is also possible to perform operation 711 and operation 713 simultaneously.

According to an embodiment, in operation 715, the processor 320 may merge the first image and the images corresponding to the multiple areas.

According to an embodiment, in operation 717, the processor 320 may control the display 360 to display the merged image through the glass member (e.g., the first transparent member 201 and the second transparent member 202 in FIG. 2). For example, the processor 320, through the display 360, may display images with progressively reduced resolutions centered on the area of the gaze area of the user.

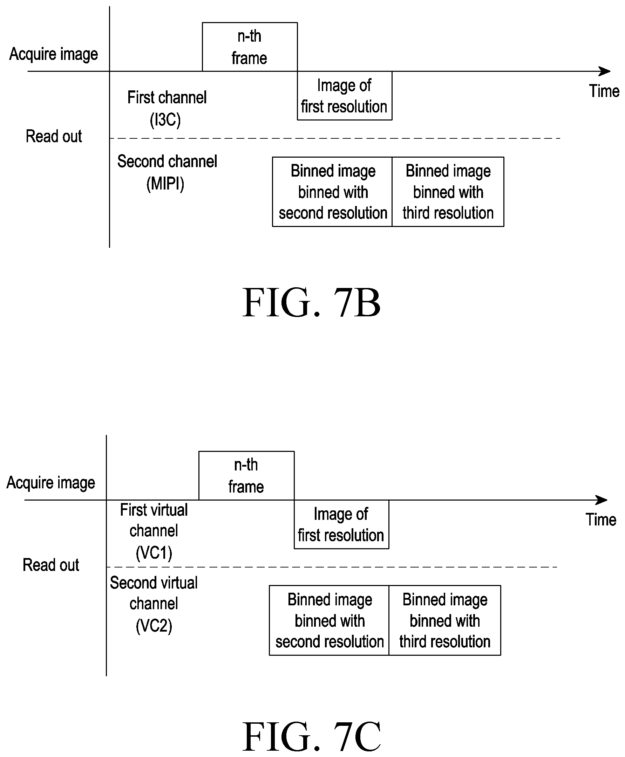

FIG. 7B is a diagram illustrating an operation of a wearable electronic device to acquire an image corresponding to a gaze area of a user and an image corresponding to an area other than the gaze area according to an embodiment.

According to an embodiment, the first channel I3C (e.g., the first channel 317 in FIG. 3B) may include a channel associated with an improved inter integrated circuit (I3C). According to an embodiment, the second channel MIPI (e.g., the second channel 319 in FIG. 3B) may include a channel associated with a mobile industry processor interface (MIPI).

According to an embodiment, the image processing circuit 315 may transmit the first image having the first resolution and corresponding to the first area to the processor 320 through the first channel 317.

According to an embodiment, the processor 320 may divide the second area into multiple areas. The processor 320 may divide an area in a relatively short distance from the first region into a third area and an area in a relatively long distance from the first region into a fourth area.

According to an embodiment, the image processing circuit 315 may perform binning on an image corresponding to the third area with the second resolution lower than the first resolution. The image processing circuit 315 may perform binning on an image corresponding to the fourth area with a third resolution lower than the second resolution.

According to an embodiment, the image processing circuit 315 may transmit the image (e.g., the image binned with the second resolution) corresponding to the third area to the processor 320 through the second channel MIPI. According to an embodiment, the image processing circuit 315 may transmit the image (e.g., the image binned with the third resolution) corresponding to the fourth area to the processor 320 through the second channel MIPI. For example, the image processing circuit 315 may sequentially transmit the third image and the fourth image to the processor 320.

FIG. 7C is a diagram illustrating an operation of a wearable electronic device to acquire an image corresponding to a gaze area of a user and an image corresponding to an area other than the gaze area according to an embodiment.

According to an embodiment, the first channel VC1 (e.g., the first channel 317 in FIG. 3B) may include a virtual channel associated with an MIPI. According to an embodiment, the second channel VC2 (e.g., the second channel 319 in FIG. 3B) may include a virtual channel associated with an MIPI.

According to an embodiment, the image processing circuit 315 may transmit the first image having the first resolution and corresponding to the first area to the processor 320 through the first virtual channel VC1.

According to an embodiment, the image processing circuit 315 may transmit the image (e.g., the image binned with the second resolution) corresponding to the third area to the processor 320 through the second virtual channel VC2. According to an embodiment, the image processing circuit 315 may transmit the image (e.g., the image binned with the third resolution) corresponding to the fourth area to the processor 320 through the second virtual channel VC2. For example, the image processing circuit 315 may sequentially transmit the third image and the fourth image to the processor 320.

Although FIGS. 7B and 7C illustrate that the image processing circuit 315 sequentially transmits the image corresponding to the first area and the image corresponding to the fourth area (e.g., the image binned with the third resolution) to the processor 320, the technical ideas herein may not be limited thereto. For example, the image processing circuit 315 may transmit the third image and the fourth image in parallel to the processor 320 through a virtual channel other than the second virtual channel.

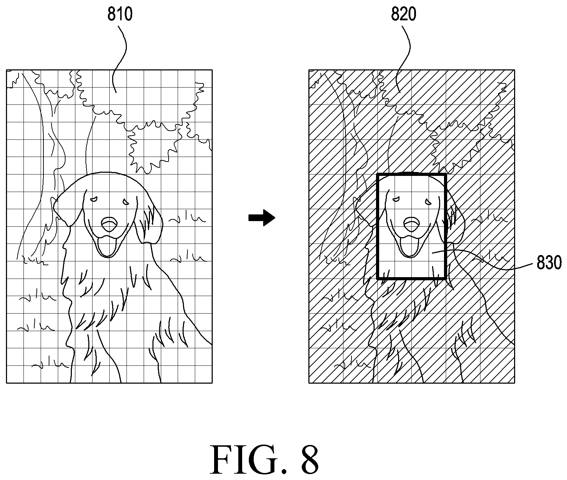

FIG. 8 is a diagram illustrating a wearable electronic device synthesizing an image corresponding to a gaze area of a user and an image corresponding to an area other than the gaze area and displaying same through a glass member according to an embodiment.

According to an embodiment, the processor (e.g., the processor 320 in FIG. 3A) may identify the gaze area of the user, based on the image generated by photographing the user's eye through the first camera (e.g., the first camera 370 in FIG. 3A).

According to an embodiment, the processor 320 may acquire an image 810 having a first resolution generated by photographing an external object, through the second camera 380 (e.g., the second camera 380 in FIG. 3A). According to an embodiment, data about the image 810 of the first resolution may be stored in the memory (e.g., the memory 313 in FIG. 3B) included in the second camera 380.

According to an embodiment, the processor 320 may determine the first area corresponding to the gaze area of the user and the second area corresponding to an area other than the gaze area in the image 810 of the first resolution.

According to an embodiment, the image processing circuit 315 may read data about the image (e.g., an entire image) of the first resolution stored in the memory 313. According to an embodiment, the image processing circuit 315 may acquire the first image corresponding to the first area from the entire image, by using the read data. According to an embodiment, the image processing circuit 315 may perform binning on the second area with the second resolution lower than the first resolution from the entire image, by using the read data. The image processing circuit 315 may acquire the second image corresponding to the second area, based on the binned image.

According to an embodiment, the image processing circuit 315 may transmit the first image 830 corresponding to the first area to the processor 320 through the first channel (e.g., the first channel 317 in FIG. 3B). According to an embodiment, the image processing circuit 315 may transmit the second image 820 corresponding to the second area to the processor 320 through the second channel (e.g., the second channel 319 in FIG. 3B).

According to an embodiment, the processor 320 may merge the first image 830 corresponding to the first area and the second image 820 corresponding to the second area to obtain a third image. According to an embodiment, the third image may be displayed through the glass member (e.g., the first transparent member 201 and the second transparent member 202 in FIG. 2).

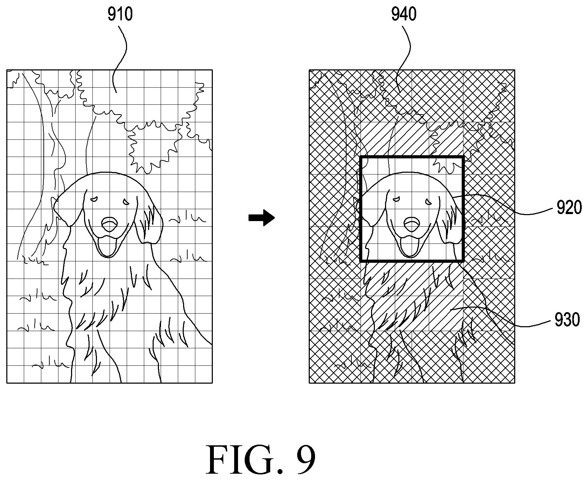

FIG. 9 is a diagram illustrating a wearable electronic device synthesizing an image corresponding to a gaze area of a user and an image corresponding to an area other than the gaze area and displaying same through a glass member according to an embodiment.

According to an embodiment, the processor (e.g., the processor 320 in FIG. 3A) may acquire an image 910 having the first resolution generated by photographing an external object through the second camera (e.g., the second camera 380 in FIG. 3A).

According to an embodiment, data about the image 910 of the first resolution may be stored in the memory (e.g., the memory 313 in FIG. 3B) included in the second camera 380.

According to an embodiment, the processor 320 may determine the first area corresponding to the gaze area of the user and the second area corresponding to an area other than the gaze area in the image 910 of the first resolution.

According to an embodiment, the processor 320 may divide the second area into multiple areas. According to an embodiment, the processor 320 may divide an area in a relatively short distance from the first region as the third area and an area in a relatively long distance from the first region as the fourth area.

According to an embodiment, the image processing circuit (e.g., the image processing circuit 315 in FIG. 3B) may read data about the image (e.g., an entire image) of the first resolution stored in the memory 313. According to an embodiment, the image processing circuit 315 may acquire the first image corresponding to the first area from the entire image, by using the read data. According to an embodiment, the image processing circuit 315 may perform binning on the third area with the second resolution lower than the first resolution from the second area, by using the read data. The image processing circuit 315 may acquire the third image corresponding to the third area, based on the image binned with the second resolution. According to an embodiment, the image processing circuit 315 may perform binning on the fourth area with the third resolution lower than the second resolution from the second area, by using the read data. The image processing circuit 315 may acquire the fourth image corresponding to the fourth area, based on the image binned with the third resolution.

According to an embodiment, the image processing circuit 315 may transmit the first image 920 corresponding to the first area to the processor 320 through the first channel (e.g., the first channel 317 in FIG. 3B). According to an embodiment, the image processing circuit 315 may transmit the second image 930 corresponding to the third area to the processor 320 through the second channel (e.g., the second channel 319 in FIG. 3B). According to an embodiment, the image processing circuit 315 may transmit the third image 940 corresponding to the third area to the processor 320 through the second channel 319.

According to an embodiment, the processor 320 may merge the first image 920 corresponding to the first area, the third image 930 corresponding to the third area, and the fourth image 940 corresponding to the fourth area to obtain a fifth image. According to an embodiment, the processor 320 may display the fifth image through the glass member (e.g., the first transparent member 201 and the second transparent member 202 in FIG. 2).

According to an embodiment, a wearable electronic device (e.g., the wearable electronic device 301 in FIG 3A) may include a first camera (e.g., the first camera 370 in FIG. 3A), a second camera (e.g., the second camera 380 in FIG. 3A) including an image processing circuit (e.g., the image processing circuit 315 in FIG. 3A), memory (e.g., 330 in FIG. 3A), and at least one processor (e.g., the processor 320 in FIG. 3A).

According to an embodiment, the memory 330 may store at least one instruction causing, when executed by the at least one processor 320, the wearable electronic device 301 to, in a state where the wearable electronic device 301 is worn by a user, identify a gaze area of the user through the first camera 370.

According to an embodiment, the memory 330 may store at least one instruction causing, when executed by the at least one processor 320, the wearable electronic device 301 to acquire an image of a first resolution by photographing an external object through the second camera 380.

According to an embodiment, the memory 330 may store at least one instruction causing, when executed by the at least one processor 320, the wearable electronic device 301 to determine, in the image, a first area corresponding to the gaze area of the user and a second area corresponding to an area other than the gaze area.

According to an embodiment, the memory 330 may store at least one instruction causing, when executed by the at least one processor 320, the wearable electronic device 301 to acquire a first image having the first resolution and corresponding to the first area from the image through a first channel (e.g., the first channel 317 in FIG. 3B) among multiple channels between the processor 320 and the second camera 380.

According to an embodiment, the memory 330 may store at least one instruction causing, when executed by the at least one processor 320, the wearable electronic device 301 to acquire a second image having a second resolution lower than the first resolution and corresponding to the second area through a second channel (e.g., the second channel 319 in FIG. 3B) among the multiple channels.

According to an embodiment, the memory 330 may store at least one instruction causing, when executed by the at least one processor 320, the wearable electronic device 301 to acquire the first image and the second image in parallel through the first channel and the second channel.

According to an embodiment, the wearable electronic device 301 may include a glass member (e.g., the first transparent member 201 in FIG. 2 or the second transparent member 202 in FIG. 2).

According to an embodiment, the wearable electronic device 301 may include a display (e.g., the display 360 in FIG. 3A) configured to display a virtual object through the glass member 201 or 202.

According to an embodiment, the memory may store at least one instruction causing, when executed by the at least one processor 320, the wearable electronic device 301 to acquire a third image in which the first image and the second image are merged.

According to an embodiment, the memory 330 may store at least one instruction causing, when executed by the at least one processor 320, the wearable electronic device 301 to control the display 360 to display the third image through the glass member 201 or 202.

According to an embodiment, the first channel 317 may include a channel associated with an improved inter integrated circuit (I3C).

According to an embodiment, the second channel 319 may include a channel associated with a mobile industry processor interface (MIPI).

According to an embodiment, the first channel 317 may include a first virtual channel associated with a mobile industry processor interface (MIPI).

According to an embodiment, the second channel 319 may include a second virtual channel associated with the MIPI.

According to an embodiment, the second camera 380 may include volatile memory.

According to an embodiment, the memory 330 may store at least one instruction causing, when executed by the at least one processor 320, the wearable electronic device 301 to store data about the image of the first resolution in the volatile memory.

According to an embodiment, the memory 330 may store at least one instruction causing, when executed by the at least one processor 320, the wearable electronic device 301 to cause the image processing circuit 315 to read the data stored in the volatile memory and perform binning on the second area with the second resolution.

According to an embodiment, the memory 330 may store at least one instruction causing, when executed by the at least one processor 320, the wearable electronic device 301 to cause the image processing circuit 315 to perform binning on a partial area of the second area with a third resolution lower than the second resolution.

According to an embodiment, the partial area may include an edge area of the second area.

According to an embodiment, the first camera 370 may include a gaze tracking camera (eye tracking camera) for identifying a gaze of the user.

According to an embodiment, an operation method of a wearable electronic device 301 may include an operation of, in a state where the wearable electronic device 301 is worn by a user, identifying a gaze area of the user through a first camera 370 included in the wearable electronic device 301.

According to an embodiment, the operation method of the wearable electronic device 301 may include an operation of acquiring an image of a first resolution generated by photographing an external object through a second camera 380 included in the wearable electronic device 301.

According to an embodiment, the operation method of the wearable electronic device 301 may include an operation of determining, in the image, a first area corresponding to the gaze area of the user and a second area corresponding to an area other than the gaze area.

According to an embodiment, the operation method of the wearable electronic device 301 may include an operation of acquiring a first image having the first resolution and corresponding to the first area from the image through a first channel 317 among multiple channels between a processor 320 included in the wearable electronic device 301 and the second camera 380.

According to an embodiment, the operation method of the wearable electronic device 301 may include an operation of acquiring a second image having a second resolution lower than the first resolution and corresponding to the second area through a second channel 319 among the multiple channels.

According to an embodiment, the operation method of the wearable electronic device 301 may include an operation of acquiring the first image and the second image in parallel through the first channel 317 and the second channel 319.

According to an embodiment, the operation method of the wearable electronic device 301 may include an operation of acquiring a third image in which the first image and the second image are merged.

According to an embodiment, the operation method of the wearable electronic device 301 may include an operation of controlling the display 360 to display the third image through the glass member 201 or 202.

According to an embodiment, the operation method of the wearable electronic device 301 may include an operation of storing data about the image of the first resolution in the volatile memory.

According to an embodiment, the operation method of the wearable electronic device 301 may include an operation of causing the image processing circuit 315 to read the data stored in the volatile memory and perform binning on the second area with the second resolution.

According to an embodiment, the operation method of the wearable electronic device 301 may include an operation of causing the image processing circuit 315 to perform binning on a partial area of the second area with a third resolution lower than the second resolution.

According to an embodiment, a non-transitory computer-readable recording medium may store at least one instruction which may perform an operation of, in a state where the wearable electronic device is worn by a user, identifying a gaze area of the user through a first camera 370 included in the wearable electronic device 301.

According to an embodiment, the non-transitory computer-readable recording medium may store at least one instruction which may perform an operation of acquiring an image of a first resolution generated by photographing an external object through a second camera 380 included in the wearable electronic device 301.

According to an embodiment, the non-transitory computer-readable recording medium may store at least one instruction which may perform an operation of determining, in the image, a first area corresponding to the gaze area of the user and a second area corresponding to an area other than the gaze area.

According to an embodiment, the non-transitory computer-readable recording medium may store at least one instruction which may perform an operation of acquiring a first image having the first resolution and corresponding to the first area from the image through a first channel 317 among multiple channels between a processor 320 included in the wearable electronic device 301 and the second camera 380.

According to an embodiment, the non-transitory computer-readable recording medium may store at least one instruction which may perform an operation of acquiring a second image having a second resolution lower than the first resolution and corresponding to the second area through a second channel 319 among the multiple channels.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101, 200, 301). For example, a processor (e.g., the processor 120) of the machine (e.g., the electronic device 101, 200, 301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. **In** such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable electronic device (101 in FIG. 1; 200 in FIG. 2; 301 in FIG. 3A) comprising:
a first camera (180 in FIG. 1; 251, 252 in FIG. 2; 370 in FIG. 3A);
a second camera (180 in FIG. 1; 253, 254, 255, 256, 260 in FIG. 2; 380 in FIG. 3A) comprising an image processing circuit (315 in FIG. 3A);
memory (130 in FIG. 1; 330 in FIG. 3A); and
at least one processor (120 in FIG. 1; 320 in FIG. 3A),
wherein the memory stores at least one instruction causing, when executed by the at least one processor, the wearable electronic device to:
while the wearable electronic device is worn by a user, identify a gaze area of the user through the first camera;
acquire an image of a first resolution generated by photographing an external object through the second camera;
determine, in the image, a first area corresponding to the gaze area of the user and a second area corresponding to an area other than the gaze area; and
acquire a first image having the first resolution and corresponding to the first area from the image through a first channel (317 in FIG. 3C) among multiple channels between the at least one processor and the second camera, and acquire a second image having a second resolution lower than the first resolution and corresponding to the second area through a second channel (319 in FIG. 3C) among the multiple channels.

2. The wearable electronic device of claim 1, wherein the wearable electronic device stores the at least one instruction further causing, when executed by the at least one processor, the wearable electronic device to acquire the first image and the second image in parallel through the first channel and the second channel.

3. The wearable electronic device of claim 1 or 2, further comprising:
a glass member (201, 202 in FIG. 2); and
a display (160 in FIG. 1; 240 in FIG. 2; 360 in FIG. 3A) configured to display a virtual object through the glass member,
wherein the at least one instruction further causes, when executed by the at least one processor, the wearable electronic device to:
acquire a third image in which the first image and the second image are merged; and
control the display to display the third image through the glass member.

4. The wearable electronic device of one of claims 1 to 3, wherein the first channel comprises a channel associated with an improved inter integrated circuit (I3C), and
wherein the second channel comprises a channel associated with a mobile industry processor interface (MIPI).

5. The wearable electronic device of one of claims 1 to 4, wherein the first channel comprises a first virtual channel associated with a mobile industry processor interface (MIPI), and
wherein the second channel comprises a second virtual channel associated with the MIPI.

6. The wearable electronic device of one of claims 1 to 5, wherein the second camera further comprises volatile memory (130 in FIG. 1; 313 in FIG. 3B), and
wherein the memory stores the at least one instruction further causing, when executed by the at least one processor, the wearable electronic device to store data about the image of the first resolution in the volatile memory.

7. The wearable electronic device of one of claims 1 to 6, wherein the memory stores the at least one instruction further causing, when executed by the at least one processor, the wearable electronic device to cause the image processing circuit to read the data stored in the volatile memory and perform binning on the second area with the second resolution.

8. The wearable electronic device of one of claims 1 to 7, wherein the memory stores the at least one instruction further causing, when executed by the at least one processor, the wearable electronic device to cause the image processing circuit to perform binning on a partial area of the second area with a third resolution lower than the second resolution.

9. The wearable electronic device of one of claims 1 to 8, wherein the partial area comprises an edge area of the second area.

10. The wearable electronic device of one of claims 1 to 9, wherein the first camera comprises a gaze tracking camera (eye tracking camera) configured to identify a gaze of the user.

11. An operation method of a wearable electronic device (101 in FIG. 1; 200 in FIG. 2; 301 in FIG. 3A), the method comprising:
in a state where the wearable electronic device is worn by a user, identifying a gaze area of the user through a first camera (180 in FIG. 1; 251, 252 in FIG. 2; 370 in FIG. 3A) included in the wearable electronic device;
acquiring an image of a first resolution generated by photographing an external object through a second camera (180 in FIG. 1; 253, 254, 255, 256, 260 in FIG. 2; 380 in FIG. 3A) included in the wearable electronic device;
determining, in the image, a first area corresponding to the gaze area of the user and a second area corresponding to an area other than the gaze area;
acquiring a first image having the first resolution and corresponding to the first area from the image through a first channel (317 in FIG. 3C) among multiple channels between at least one processor (120 in FIG. 1; 320 in FIG. 3A) included in the wearable electronic device and the second camera; and
acquiring a second image having a second resolution lower than the first resolution and corresponding to the second area through a second channel (319 in FIG. 3C) among the multiple channels.

12. The method of claim 11, further comprising acquiring the first image and the second image in parallel through the first channel and the second channel.

13. The method of one of claims 11 to 12, wherein the wearable electronic device further comprises:
a glass member; and
a display configured to display a virtual object through the glass member, and
wherein the method further comprises:
acquiring a third image in which the first image and the second image are merged; and
controlling the display to display the third image through the glass member.

14. The method of one of claims 11 to 13, wherein the first channel comprises a channel associated with an improved inter integrated circuit (I3C), and
wherein the second channel comprises a channel associated with a mobile industry processor interface (MIPI).

15. A non-transitory computer-readable recording medium storing at least one instruction capable of executing:
in a state where a wearable electronic device (101 in FIG. 1; 200 in FIG. 2; 301 in FIG. 3A) is worn by a user, identifying a gaze area of the user through a first camera (180 in FIG. 1; 251, 252 in FIG. 2; 370 in FIG. 3A) included in the wearable electronic device;
acquiring an image of a first resolution generated by photographing an external object through a second camera (180 in FIG. 1; 253, 254, 255, 256, 260 in FIG. 2; 380 in FIG. 3A) included in the wearable electronic device;
determining, in the image, a first area corresponding to the gaze area of the user and a second area corresponding to an area other than the gaze area;
acquiring a first image having the first resolution and corresponding to the first area from the image through a first channel (317 in FIG. 3C) among multiple channels between at least one processor (120 in FIG. 1; 320 in FIG. 3A) included in the wearable electronic device and the second camera; and
acquiring a second image having a second resolution lower than the first resolution and corresponding to the second area through a second channel (319 in FIG. 3C) among the multiple channels.
